**Europäisches Patentamt**

**European Patent Office**

**Office européen des brevets**

(19)

(11) Veröffentlichungsnummer: **0 123 061**
**A1**

(12) # EUROPÄISCHE PATENTANMELDUNG

(21) Anmeldenummer: **84102083.7**

(22) Anmeldetag: **29.02.84**

(51) Int. Cl.³: **B 01 D 53/26**

(30) Priorität: **25.03.83 DE 3310842**

(43) Veröffentlichungstag der Anmeldung:
**31.10.84 Patentblatt 84/44**

(84) Benannte Vertragsstaaten:
**AT BE CH DE FR GB IT LI LU NL SE**

(71) Anmelder: **Zander Aufbereitungstechnik GmbH**
**Im Teelbruch 86**
**D-4300 Essen 18 - Kettwig(DE)**

(72) Erfinder: **Zander, Bernd**
**Im Teelbruch 86**
**D-4300 Essen 18 - Kettwig(DE)**

(74) Vertreter: **Patentanwaltsbüro Cohausz & Florack**
**Postfach 14 01 47**
**D-4000 Düsseldorf 1(DE)**

(54) Adsorptionstrockner.

(57) Die Erfindung bezieht sich auf einen Adsorptionstrockner für mit Feuchtigkeit gesättigte Druckluft. Die Druckluft wird abwechselnd über zwei mit Adsorptionsmittel gefüllte Kammern (3, 4) geleitet, wobei jeweils das Adsorptionsmittel einer Kammer durch die in der anderen Kammer entfeuchtete Druckluft regeneriert wird. Um die zur Regenerierung abgezweigte, getrocknete Abluft möglichst optimal auszunutzen, ist vorgesehen, daß die Taktzeit in Abhängigkeit von der Temperatur, dem Druck und dem Volumenstrom der zu entfeuchtenden Abluft derart eingestellt wird, daß in jedem Takt das Adsorptionsmittel in seiner Kapazität möglichst voll ausgenutzt wird und nur so viel Druckluft verbraucht wird, wie für die Regeneration des Adsorptionsmittels unbedingt erforderlich ist.

EP 0 123 061 A1

# COHAUSZ & FLORACK 0123061

PATENTANWALTSBÜRO

SCHUMANNSTR. 97 D-4000 DÜSSELDORF 1

Telefon: (02 11) 68 33 46          Telex: 0858 6513 cop b

PATENTANWÄLTE:
Dipl.-Ing. W. COHAUSZ  ·  Dipl.-Ing. R. KNAUF  ·  Dipl.-Ing. H. B. COHAUSZ  ·  Dipl.-Ing. D. H. WERNER

_ 1 _

Anm.: Fa. Zander Aufbereitungstechnik GmbH
      Im Teelbruch 86, 4300 Essen 18-Kettwig


Adsorptionstrockner


Die Erfindung bezieht sich auf einen Adsorptionstrockner für mit Feuchtigkeit gesättigte Druckluft, bestehend aus mindestens zwei mit einem Adsorptionsmittel für die Feuchtigkeit gefüllten Kammern, die mittels einer Ventilsteuerung im Takt abwechselnd in die zu einem Verbraucher führende Druckluftleitung einschaltbar sind, wobei zur Regeneration des Adsorptionsmittels der nicht in der Druckluftleitung eingeschalteten Kammer mittels der Ventilsteuerung vom Ausgang der in der Druckluftleitung eingeschalteten Kammer über eine Zweigleitung ein Teilstrom der entfeuchteten Druckluft abgezweigt und über eine Drosselblende durch die nicht in der Druckluftleitung liegende Kammer in die Atmosphäre geleitet wird.

Adsorptionstrockner dieser Art sind bekannt und haben sich in der Praxis gut bewährt. Die Taktzeit wird so eingestellt, daß bei maximalem Luftdurchsatz auch am Ende der Taktzeit noch eine ausreichende Trocknung gewährleistet ist. Diese Betriebsweise ist jedoch unwirtschaftlich, wenn der Trockner mit einer geringeren als der maximal zulässigen Leistung betrieben wird. Die Unwirtschaftlichkeit ist darin

K/Tn.- 37 081

16.3.83

begündet, daß auch bei geringerer Leistung dieselbe getrocknete Luftmenge zur Regeneration des Adsorptionsmittels eingesetzt wird, obwohl in diesem Fall eine wesentlich geringere Luftmenge für die Regeneration nur benötigt wird.

Der Erfindung liegt die Aufgabe zugrunde, einen Adsorptionstrockner zu schaffen, mit dem feuchtigkeitsgesättigte Druckluft wirtschaftlicher als bisher getrocknet werden kann.

Diese Aufgabe wird erfindungsgemäß dadurch gelöst, daß bei konstanter Taktzeit für die zur Regeneration des Adsorptionsmittels der einen Kammer zuzuführende., entfeuchtete Luft die Taktzeit für die der anderen Kammer zuzuführende, zu entfeuchtende Druckluft von einer Steuereinrichtung in Abhängigkeit von der Temperatur dem Druck und dem Volumenstrom der zu entfeuchtenden Druckluft eingestellt wird, wobei die Steuereinrichtung einen programmierten Speicher, in dem den einzelnen Temperaturstufen Zeiten für den Takt zugeordnet sind, in dem Feuchtigkeitsgehalt der feuchtigkeitsgesättigten Druckluft bei diesen Temperaturstufen entsprechen, und einen Rechner umfaßt, der diese Zeiten mit dem zugehörigen Druck und Volumenstrom verknüpft und daraus die Taktzeit bis zum Erreichen eines vorgegebenen Wertes der Kapazitätsausnutzung des in der Kammer enthaltenen Adsorptionsmittels errechnet.

Die Erfindung beruht auf der Erkenntnis, daß eine dem Feuchtigkeitsgehalt der zu trocknenden Druckluft entsprechende Einstellung der Taktzeit sich vorrangig an der Temperatur der Druckluft zu orientieren hat, weil zwischen der Temperatur und dem Feuchtigkeitsgehalt der Druckluft ein nicht linearer Zusammenhang besteht und Druck und Volumenstrom als maßgebende Größen für das Volumen wegen der linearen Beziehung zwischen Feuchtigkeitsgehalt und Volumen auf einfache Art und Weise mit einem entsprechenden Korrekturfaktor berücksichtigt werden können. Aufgrund der erfindungsgemäßen Berücksichtigung der verschiedenen, auf die Zeit bezogenen, Faktoren, die für die vom Adsorptionsmittel aufzunehmende Feuchtigkeitsmenge maßgebend sind, wird unter allen möglichen Betriebsbedingungen die Taktzeit optimal eingestellt, so daß die für die Regeneration abgezweigte, getrocknete Luft voll ausgenutzt wird.

Im folgenden wird die Erfindung anhand einer Zeichnung näher erläutert, die schematisch einen Adsorptionstrockner zeigt.

Von einer nicht dargestellten Druckluftquelle wird feuchtigkeitsgesättigte Druckluft über eine Druckluftleitung 1, 2 zu einem nicht dargestellten Verbraucher geleitet. In der Druckluftleitung 1, 2 liegen parallel zueinander zwei Kammern 3, 4, die mit einem Adsorptionsmittel für Feuchtigkeit gefüllt sind. Der erste Teil 1 der Druckluftleitung verzweigt sich in zwei Leitungen 5, 6, die jeweils zu einer Kammer 3 bzw. 4 führen. In jeder Zweigleitung 5, 6 liegt ein Absperrventil 7, 8. Ferner sind an diesen Abzweigleitungen 5, 6 in die Atmosphäre führende Leitungen 9, 10 angeschlossen, in denen ebenfalls Absperrventile 11, 12 liegen. Ausgangsleitungen 13, 14, in denen ebenfalls Absperrventile 15, 16 vorgesehen sind, münden in den zweiten Teil 2 der Druckluftleitung. Die Ausgangsleitungen 13, 14 sind über eine Verbindungsleitung 17 mit einem Druckminderventil 18 miteinander verbunden.

Ein solcher Adsorptionstrockner arbeitet auf folgende Art und Weise:

Bei geschlossenen Ventilen 7, 12, 15 wird die Druckluft über die Kammer 4 geleitet und hier entfeuchtet. Ein Teilstrom der getrockneten Abluft gelangt über die Leitung 17 und nach Entspannung durch die Drosselblende 18 in die Kammer 3 und von hier über die Leitung 9 in die Atmosphäre. Beim Durchströmen der Kammer 3 wird dem Adsorptionsmittel die Feuchtigkeit entzogen und damit regeneriert.

Beim nächsten Takt werden die Ventile 8, 11 und 16 geschlossen, so daß die Druckluft in der Kammer 3 entfeuchtet wird und das Adsorptionsmittel in der Kammer 4 regeneriert wird.

Zur Einstellung der Taktzeit dient die noch im einzelnen zu beschreibende Steuereinrichtung. Die Steuereinrichtung weist mehrere Fühler 19 bis 21, und zwar für die Temperatur, den Druck und den Volumenstrom für die zu entfeuchtende Druckluft, auf. Der Temperaturfühler 19 liefert das Temperatursignal an einen programmierten Speicher 22. In diesem Speicher ist der nicht lineare Zusammenhang zwischen Temperatur und Feuchtigkeitsgehalt festgehalten. Wird eine bestimmte Temperatur gemessen, dann liefert der Speicher 22 ein dem Feuchtigkeitsgehalt der Druckluft bei dieser Temperatur entsprechendes Signal für die Taktzeit. Dieses Signal wird mit einem Signal für das Volumen in einem Rechner 23 verknüpft. Da das Volumen von dem Druck und dem Volumenstrom abhängt, werden diese beiden Werte in ein dem Volumen entsprechendes Signal in einem Rechner 24 umgewandelt. Zweckmäßigerweise erfolgt diese Umwandlung derart, daß dem Zeitsignal und dem Volumensignal derselbe Bezugsdruck zugrunde gelegt wird. Der Rechner 23, der das Zeitsignal und das Volumensignal miteinander verknüpft, berücksichtigt außerdem die Zeit, über die diese Signale anstehen und entwickelt daraus die Taktzeit, die bis zum Erreichen des vorgegebenen Wertes der Kapazitätsausnutzung des in der einen Kammer enthaltenen Adsorptionsmittels benötigt wird. Diese Taktzeit wird in einer Leistungsstufe 25 in entsprechende Steuersignale für die einzelenen Ventile 7, 8, 11, 12, 15, 16 umgesetzt, damit die beiden Kammern 3, 4 in dem oben beschriebenen Wechsel betrieben werden, wobei die Taktzeit für die über die Drosselblende 18 der einen oder anderen Kammer 3 bzw. 4 zuzuleitenden, entfeuchteten Luft für die Regeneration des Adsorptionsmittels konstant gehalten wird. Auf diese Art und Weise wird erreicht, daß nur die unbedingt für die Regeneration des Adsorptionsmittels erforderliche Druckluft verbraucht wird.

**COHAUSZ & FLORACK**

PATENTANWALTSBÜRO

SCHUMANNSTR. 97 D-4000 DÜSSELDORF 1

Telefon: (02 11) 68 33 46          Telex: 0858 6513 cop d

PATENTANWÄLTE:

Dipl.-Ing. W. COHAUSZ  ·  Dipl.-Ing. R. KNAUF  ·  Dipl.-Ing. H. B. COHAUSZ  ·  Dipl.-Ing. D. H. WERNER

0123061

- 6 -

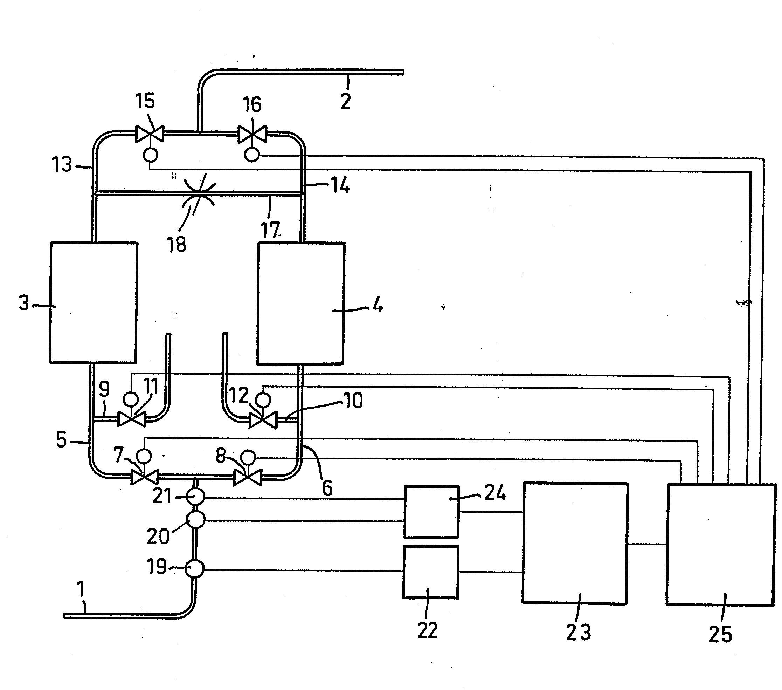

Anspruch:

Adsorptionstrockner für mit Feuchtigkeit gesättigte Druckluft, bestehend aus mindestens zwei mit einem Adsorptionsmittel für Feuchtigkeit gefüllten Kammern, die mittels einer Ventilsteuerung im Takt abwechselnd in die zu einem Verbraucher führende Druckluftleitung einschaltbar sind, wobei zur Regeneration des Adsorptionsmittels in der nicht in der Druckleitung eingeschalteten Kammer mittels der Ventilsteuerung vom Ausgang der in der Druckluftleitung eingeschalteten Kammer über eine Zweigleitung ein Teilstrom der entfeuchteten Druckluft abgezweigt und über eine Drosselblende durch die nicht in der Druckluftleitung liegende Kammer in die Atmosphäre geleitet wird, d a d u r c h   g e k e n n z e i c h n e t , daß bei konstanter Taktzeit für die zur Regenaration des Adsorptionsmittels der einen Kammer zuzuführende ., entfeuchtete Luft die Taktzeit für die der anderen Kammer zuzuführende, zu entfeuchtende Druckluft von einer Steuereinrichtung (21 -25) in Abhängigkeit von der Temperatur dem Druck und dem Volumenstrom der zu entfeuchtenden Druckluft eingestellt wird, wobei die Steuereinrichtung (21-25) einen programmierten Speicher (22), in dem den einzelnen Temperaturstufen Zeiten für den Takt zugeordnet sind, die dem Feuchtigkeitsgehalt der feuchtigkeitsgesättigten Druckluft bei diesen Temperaturstufen entspre-

K/Tn.- 37 081

16.3.83

chen, und einen Rechner (23) umfaßt, der diese Zeiten mit dem zugehörigen Druck und Volumenstrom verknüpft und daraus die Taktzeit bis zum Erreichen eines vorgegebenen Wertes der Kapazitätsausnutzung des in der Kammer (3 oder 4) enthaltenen Adsorptionsmittels errechnet.

0123061

**Europäisches Patentamt**

# EUROPÄISCHER RECHERCHENBERICHT

Nummer der Anmeldung

EP 84 10 2083

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 448 561 (Z.F. SEIBERT) <br> * Spalte 15, Absätze 19-35; Spalte 16, Absätze 5-69; Abbildung 7 * <br><br> --- | 1 | B 01 D 53/26 |
| Y | US-A-4 247 311 (C.F. SEIBERT) <br> * Spalte 2, Absätze 17-26; Spalte 3, Absätze 37-43; Spalte 4, Absatz 63 - Spalte 5, Absatz 16; Spalte 8, Absatz 57 - Spalte 12, Absatz 7 * <br><br> ----- | 1 | |

RECHERCHIERTE SACHGEBIETE (Int. Cl. ³)

B 01 D

Der vorliegende Recherchenbericht wurde für alle Patentansprüche erstellt.

| Recherchenort | Abschlußdatum der Recherche | Prüfer |
|---|---|---|
| DEN HAAG | 13-07-1984 | PYFFEROEN K. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82